# FASCICULE DE BREVET EUROPEEN

(11) **EP 0 647 724 B1**
(45) Date de publication et mention de la délivrance du brevet: **20.01.1999**
(21) Numéro de dépôt: 94420269.6
(22) Date de dépôt: 07.10.1994
(51) Int. Cl.: C22F 1/18

(54) **Procédé de fabrication d'un produit plat en alliage de zirconium comprenant un réchauffage dans le domaine béta par infrarouges**
Verfahren zur Herstellung eines flachen Erzeugnisses aus einer Zirkonlegierung anschliessend eine Aufheizung mittels Infrarotstrahlung im Beta-Gebiet
Process for manufacturing flat products from zirconium alloy, including a reheating treatment by infrared radiation in the beta range

(30) Priorité: 11.10.1993 FR 9312330
(43) Date de publication de la demande: 12.04.1995
(73) Titulaire: Compagnie Européenne du Zirconium CEZUS, F-92400 Courbevoie (FR)
(72) Inventeur: Dumas, Gérard, F-73200 Albertville (FR); Barberis, Pierre, F-73200 Albertville (FR); Bunel, Gérard, F-61370 Echauffour (FR)
(74) Mandataire: Mougeot, Jean-Claude

(56) Documents cités:
- EP-A- 0 213 771
- FR-A- 2 303 865
- FR-A- 2 673 198
- US-A- 4 636 267
- PATENT ABSTRACTS OF JAPAN vol. 007, no. 034 (C-150) 10 Février 1983 & JP-A-57 188 660 (KOBE SEIKOSHO K.K.) 19 Novembre 1982

## Description

L'invention concerne un procédé de fabrication d'un produit plat en alliage de zirconium consistant en un feuillard, bande ou tôle d'épaisseur comprise entre 0,4 et 3 mm, ce procédé comprenant après un laminage à froid un réchauffage et un maintien dans le domaine béta dudit produit, ledit maintien étant suivi d'un refroidissement rapide, selon le préambule de la revendication 1.

Il est courant de désigner les opérations de traitement thermique ci-dessus par une expression telle que "trempe depuis le domaine béta".

On connaît un tel procédé par la demande de brevet FR-A-2673 198, selon laquelle une bande en Zircaloy 2 ou Zircaloy 4 passe entre des galets d'au moins deux couples de galets successifs alimentés en courant électrique de façon à former avec la bande une boucle dudit courant. Des irrégularités de contact électrique entre les galets et la bande rendent ce procédé difficile à utiliser à l'échelle industrielle, la reproductibilité et l'homogénéité des températures atteintes dans le produit n'étant pas alors satisfaisantes.

On connaît par ailleurs par FR-A-2303865 = GB-A-1537930 un procédé dans lequel une tôle en alliage de zirconium pour usage en réacteur nucléaire, par exemple en Zircaloy 4 d'épaisseur 4 mm, est réchauffée jusqu'à au moins 900°C par induction haute fréquence. Le réchauffage de la tôle est superficiel. L'utilisation d'une fréquence plus faible permet le réchauffage de la tôle dans toute son épaisseur mais avec des gradients de température importants et des déformations lors d'un refroidissement rapide succédant à ce réchauffage. La seule température de réchauffage donnée en exemple est "900°C", correspondant au domaine (alpha + béta) dans le cas du Zircaloy 2 ou 4.

La demanderesse s'est donné pour tâche de mettre au point un procédé de réchauffage et trempe depuis le domaine béta: à la fois reproductible, rapide, et donnant une résistance à la corrosion dans les réacteurs nucléaires plus reproductible obtenue par la mise en oeuvre desdites conditions de trempe suivie éventuellement d'un recuit en alpha.

Le procédé de l'invention est caractérisé en ce que on effectue ledit réchauffage et ledit maintien au moyen de lampes à rayons infrarouges de longueur d'onde comprise entre 0,8 et 5 micromètres et de préférence entre 1 et 3 micromètres assurant sur la largeur du produit une différence maximale de températures inférieure à 35°C, ladite largeur étant comprise entre 50 et 600 mm.

Ce réchauffage se fait le plus souvent sous une atmosphère de gaz inerte, typiquement à base d'argon, d'azote ou d'hélium, pour éviter l'oxydation du produit. Alors que le profil de température travers du produit comporte des écarts supérieurs à 60°C en induction à flux transversal, avec des températures plus faibles entre chaque bord longitudinal et le milieu, le profil travers obtenu par réchauffage aux infrarouges est aplati avec un léger affaissement près de chaque bord longitudinal, l'écart total de température étant dans chaque section inférieur à 35°C. Les variations de température en long sont typiquement inférieures à 10°C. Le réchauffage est très rapide, il dure par exemple moins de 40 s entre l'ambiante et 1040°C pour une bande ou tôle d'épaisseur 1,4 mm. L'alimentation et le pilotage des lampes ou tubes à rayons infrarouges procurent une bonne fiabilité de ce réchauffage, donnant une succession d'avantages:
- choix beaucoup plus précis de la position des températures minimale et maximale du produit dans le domaine béta;
- bien meilleur contrôle de la taille des grains béta et des mises en solution avant le refroidissement rapide (la trempe);
- microstructure après refroidissement plus homogène;
- par suite gains de poids en corrosion uniforme et aussi nodulaire plus réguliers, et en moyenne plus faibles si on a effectué le réchauffage dans la partie inférieure du domaine béta.

Pour le réchauffage et le maintien dans le domaine béta, on préfère utiliser des lampes dont les tubes infrarouges sont disposées selon la direction longitudinale du produit plat, chaque tube étant piloté individuellement. On ramène ainsi la différence maximale de température travers du produit en-dessous de 25°C, et typiquement comprise entre 10 et 20°C.

Les conditions préférentielles de mise en oeuvre de l'invention peuvent être précisées davantage dans le cas des alliages Zircaloy 2 et Zircaloy 4. Les compositions de ces alliages Zircaloy 2 et Zircaloy 4 sont données par les spécifications ASTM B 352-85, ces alliages y correspondent respectivement aux nuances R 60804 et R 60802.

Ces conditions préférentielles s'appliquent aussi aux mêmes alliages modifiés par abaissement de la teneur en Sn jusqu'à un minimum de 0,5%, et à l'alliage Zr-Fe-V décrit par le brevet FR-B-2624136 = US-A-4981527 de la demanderesse.

Pour tous les alliages qui précèdent, le domaine béta comprend au moins l'intervalle de températures 980 à 1100°C.

Selon une première condition préférentielle, le début du refroidissement rapide a beaucoup d'importance sur les résistances à la corrosion uniforme d'une part et nodulaire d'autre part. Les gains de masse surfaciques correspondants sont tous deux fortement diminués si le refroidissement du produit plat est de 40 à 100°C/s entre 1000 et 800°C.

Selon le procédé de l'invention pour la fabrication d'un produit plat, il est souvent pratique de réchauffer l'alliage de Zr au moyen de lampes à rayons infrarouges rayonnant sur une face du produit, un réfractaire de préférence blanc étant situé à faible distance de l'autre face de ce produit. Le fait de passer de 40 mm à 20 mm de ce réfractaire entraîne une augmentation de la vitesse de montée en température du produit de 40 à 60% et cette distance est de préférence choisie inférieure à 30 mm. Un réfractaire blanc réfléchit la plus grande partie de l'énergie thermique rayonnée par l'autre face et, à chauffage infrarouge constant, permet en lui-même d'obtenir une vitesse de montée en température du produit plat 1,2 fois plus élevée qu'un réfractaire de couleur sombre.

Selon une deuxième condition préférentielle, profitant de l'excellente homogénéité de température du produit grâce au réchauffage aux infrarouges, on réchauffe le produit avec une température typiquement en tous ses points comprise entre 1020 et 1060°C avant de le refroidir rapidement. Le temps de montée en température est particulièrement court:
- de 15 à 40 secondes lorsque le produit a une épaisseur comprise entre 0,4 et 1,4 mm;
- de 30 à 80 secondes lorsque le produit a une épaisseur comprise entre 1, 4 et 3 mm.

Selon une autre condition s'appliquant de façon générale, de façon à limiter le grossissement de la structure d'orientation bêta dans cette phase d'homogénéisation avant refroidissement rapide, le maintien dans le domaine bêta comprend de préférence 5 à 30 secondes au-dessus de 980°C.

Enfin selon une troisième condition préférentielle, il est souvent préféré de réaliser la succession des traitements de l'invention au défilé, le produit plat circulant entre un ensemble de tubes infrarouges et soit un réfractaire disposé à moins de 30 mm du produit, soit un deuxième ensemble de tubes infrarouges, le produit étant alors protégé sur ses deux faces par du gaz neutre, et circulant ensuite à travers des moyens de refroidissement rapide, par exemple de l'eau ou un jet de gaz neutre.

Selon cette technique de traitement au défilé, le produit plat étant typiquement sous la forme d'une bande sous tension circulant entre deux rouleaux respectivement dérouleur et enrouleur, on a remarqué que le réchauffage entre deux ensembles de tubes infrarouges réchauffant symétriquement les deux faces de la bande limitait beaucoup les déformations en travers du produit après le refroidissement rapide: la dénivellation travers est alors au maximum de 0,5% de la largeur, alors que avec le chauffage aux infrarouges d'une seule face cette dénivellation travers est typiquement de 1,5 à 2% de la largeur.

La planéité du produit après trempe permet d'éviter un planage entre rouleaux dont l'écrouissage irrégulier est défavorable à la résistance à la corrosion, ou tout au moins de faciliter ce planage en limitant les irrégularités d'écrouissage et leur dit effet défavorable.

### AVANTAGE DE L'INVENTION

- Obtention d'une structure plus régulière, donnant une résistance à la corrosion en moyenne améliorée et plus reproductible.
- Suppression ou limitation des déformations travers, évitant ou limitant les planages et leur effet néfaste à la résistance à la corrosion dans un réacteur nucléaire.
- Rapidité surprenante des traitements.

### EXEMPLES

Les figures 1 et 2 représentent des profils de température sur produit plat en alliage de Zr obtenus respectivement par réchauffage par rayons infrarouges et par induction.

La figure 3 représente une disposition d'essais de chauffage par infrarouges de tôles en Zircaloy 4.

La figure 4 représente les variations de température observées sur les tôles testées selon la disposition de la figure 3.

La figure 5 représente une installation de traitement selon l'invention de feuillards en alliages de Zr.

### 1) Figures 1 et 2

On a comparé les profils de températures 1 et 2 obtenus respectivement en chauffage par infrarouges courts (IR) et en induction électrique flux transverse sur des tôles en Zircaloy 4 de largeur 300 mm et d'épaisseur comprise entre 2 et 3 mm, à 1000°C.

Le profil 1 devient bombé presque plat à 10 à 15 mm de chaque bord de la tôle correspondant à ses extrémités A₁ et A₂. La différence de température maximale ΔT1 est liée à l'effet des bords et inférieure à 20°C.

Le profil 2 est biconcave, avec des creux de température tels que C₂ situés à D = 40 à 50 mm de chaque bord (A₂ ou B₂); La différence de température maximale ΔT2 est de 60 à 70°C.

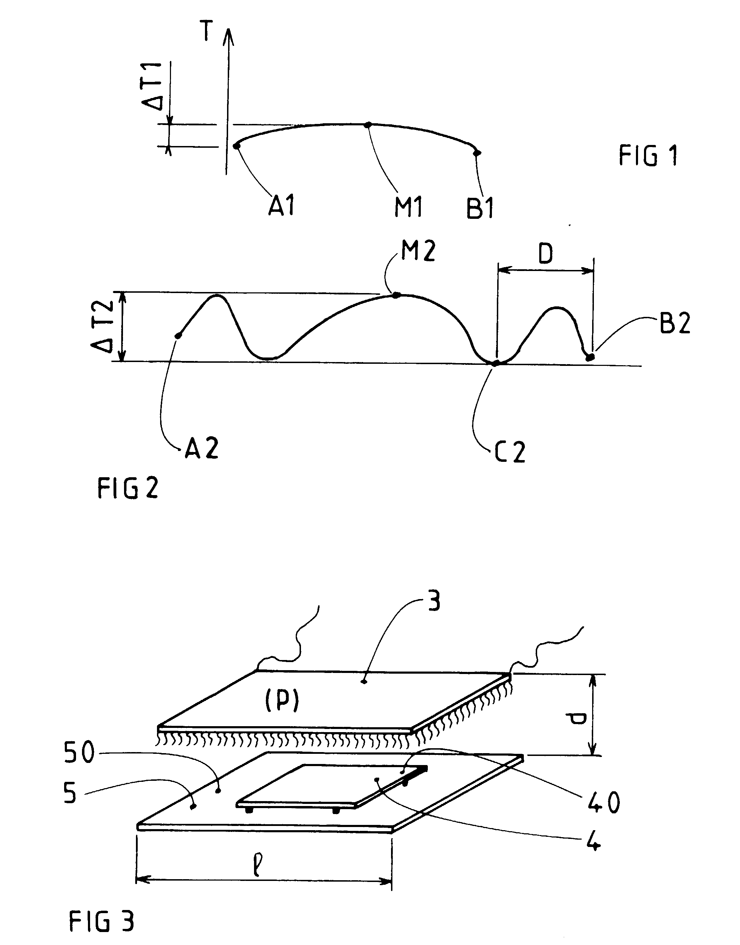

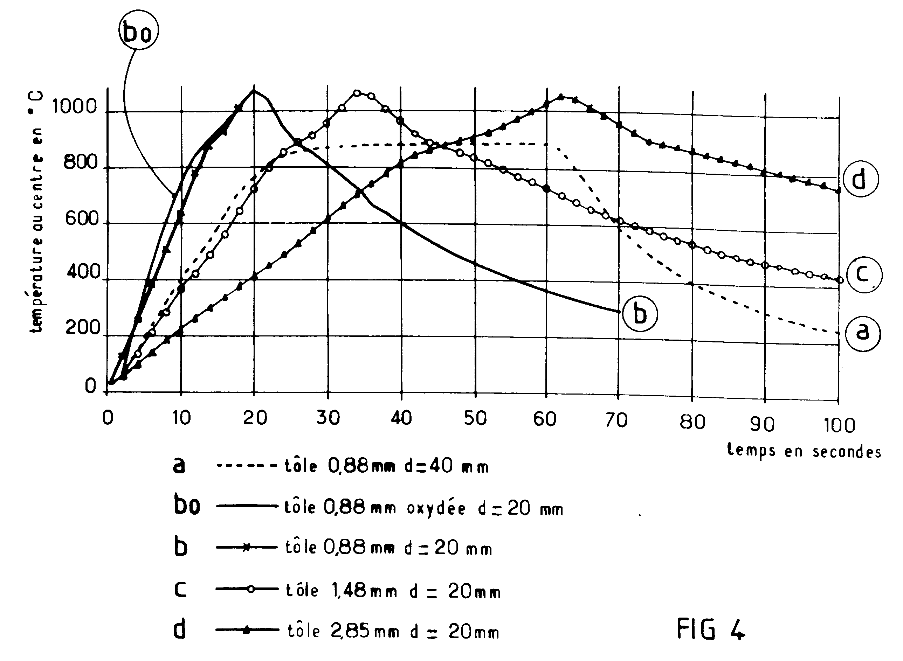

### 2) Essais de chauffage statique aux rayons infrarouges de tôles en Zircaloy 4 - (figures 3 et 4).

2.1 Installation (figure 3)
Elle comporte des tubes à infrarouges "courts" (longueur d'onde 1 à 3 micromètres) avec filament en tungstène porté à 2100°C environ. Alimentation en courant alternatif 230 V, puissance électrique de 3 kW par tube.
Les connexions des tubes ne devant pas dépasser 350°C, elles sont refroidies par un soufflage d'air important: 13 m3/heure/connexion. On peut aussi utiliser des tubes avec circulation d'eau.
Le panneau de chauffage 3 comporte 6 tubes, soit une puissance totale de 18 kW. Il développe une densité de puissance P d'environ 180 kW à une distance "d" de la tôle 4 de 40 mm, et de 220 kW/m2 à 20 mm.
La tôle 4 de largeur 250 mm est disposée à l'écartement "d" des tubes sur une sole 5 qui déborde de la tôle 4 avec une largeur "1" de 300 mm.
2.2. Essais
On a suivi la température de la face supérieure 40 de tôle 4 (figure 4), successivement d'épaisseurs 0,88, 1,48 et 2,85 mm. La faible inertie du dispositif est incontestable: le panneau atteint son régime de fonctionnement en quelques dixièmes de secondes à peine; de même lorsque l'on coupe l'alimentation du panneau 3, une fois dépassée la température de transus bêta comprise entre 960 et 980°C. Ceci entraîne une grande souplesse de pilotage du système.
2.2.1. Sole 5 sombre / d = 40 mm
Epaisseur 0,88 mm : courbe a
Le panneau 3 est trop éloigné de la tôle 4 et la sole "sombre" absorbe une grande partie de l'énergie rayonnée par la face inférieure de la tôle.
Dans ces conditions, la température de la tôle 4 s'élève rapidement à 40°C/s, avant de tendre asymptotiquement vers l'état stationnaire à 900°C, pour lequel les pertes radiatives et convectives compensent l'apport du rayonnement IR.
2.2.2 Réfractaire blanc 50 / d = 20 mm
Pour augmenter le rendement de l'installation, on a:
- rapproché le panneau 3, "d" passant de 40 à 20 mm;
- placé la plaque sur un réfractaire blanc 50
afin de renvoyer une grande partie de l'énergie rayonnée par la face inférieure.
Le rendement amélioré conduit à des bilans thermiques sur les deux faces de la tôle 4 qui ont permis de dépasser le transus bêta sur tous les échantillons testés.
Les inflexions des courbes vers 800°C et 950 à 1000°C permettent de visualiser clairement le domaine biphasé (alpha + béta).
Une fois le domaine béta atteint, on a coupé l'alimentation du panneau et on a enregistré la phase de refroidissement de la tôle 4.
Pour ces essais de chauffage aux infrarouges des tôles 4 par leur seule face 40, le bilan des vitesses de chauffage et de refroidissement est le suivant:

**Tableau 1 (d = 20 mm)**

| Epaisseur tôle | Courbe de la figure 4 | Temps de montée à 1025°C | Vitesse moyenne de montée | Vitesse moyenne de refroidissement de 1000 à 800°C |
|---|---|---|---|---|
| (mm) | | (s) | (°C/s) | (°C/s) |
| 0,88 | b | 20 | 50 | 25 |
| 0,88 oxydé | bo | 18 | 55 | 25 |
| 1,48 | c | 35 | 25 à 30 | 13 |
| 2,85 | d | 60 | 15 à 20 | 8 |

Le cas bₒ montre qu'une légère oxydation de la tôle améliore la vitesse de montée en température, par meilleure absorption des IR.

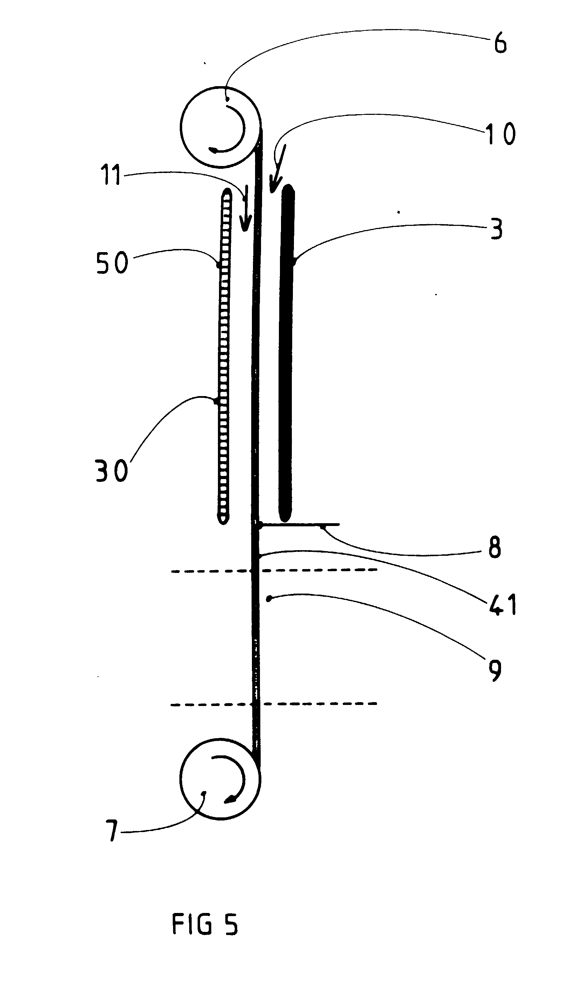

### 3) Dispositif de traitement selon l'invention au défilé (figure 5)

La bande 41 en Zircaloy 2 ou 4 est en tension entre deux rouleaux dérouleur 6 et enrouleur 7. Elle défile entre un panneau 3 de lampes ou tubes infrarouges situées à 20 mm de la bande 41 et un panneau réfractaire blanc 50 situé à 10 à 20 mm de la bande 41. La vitesse de défilement est comprise entre 0,7 à 1,5 m/min. Un moyen de contrôle 8 de la température de la bande 41 à la sortie du chauffage aux infrarouges sert en même temps au réglage de la puissance du panneau 3. La bande 41 traverse ensuite une zone de refroidissement 9 par gaz inerte pulsé, ou par de l'eau ou de l'azote liquide projeté en fines gouttelettes. Du gaz inerte, par exemple de l'argon, de l'hélium ou de l'azote circule selon les flèches 10 et 11 sur chaque face de la bande 41.

Le panneau réfractaire 50 peut être remplacé par un second panneau à infrarouges 30 situé à 20 mm de la bande 41. Le chauffage symétrique 3 et 30 améliore à la fois la productivité et la qualité obtenue.

### Applications industrielles

Pièces de fixation et d'espacement, typiquement conformées et usinées, de réacteurs nucléaires à eau pressurisée ou à eau bouillante.

## Revendications

1. Procédé de fabrication d'un produit plat (4,41) en alliage de zirconium consistant en un feuillard, bande (41) ou tôle (4) d'épaisseur comprise entre 0,4 et 3 mm, ce procédé comprenant après un laminage à froid un réchauffage et un maintien dans le domaine bêta dudit produit, ledit maintien étant suivi d'un refroidissement rapide et éventuellement d'un recuit, caractérisé en ce qu'on effectue ledit réchauffage et ledit maintien au moyen de lampes (3) à rayons infrarouges de longueur d'onde comprise entre 0,8 et 5 micromètres assurant sur la largeur du produit une différence maximale de températures (ΔT1) inférieure à 35°C, ladite largeur étant comprise entre 50 et 600 mm.

2. Procédé selon la revendication 1, caractérisé en ce que lesdites lampes (3) comprennent des tubes à infrarouges disposés selon la direction longitudinale dudit produit (4,41) chaque tube étant piloté individuellement.

3. Procédé selon la revendication 2, caractérisé en ce que ladite différence de température (ΔT1) est inférieure à 25°C.

4. Procédé selon l'une quelconque des revendications 1 à 3, caractérisé en ce que ledit alliage est le Zircaloy 2 ou le Zircaloy 4.

5. Procédé selon la revendication 4, caractérisé en ce que le refroidissement rapide du produit comporte un refroidissement de 40 à 100°C/s entre 1000 et 800°C.

6. Procédé selon l'une quelconque des revendications précédentes, caractérisé en ce que on effectue ledit réchauffage et ledit maintien dans le domaine béta avec les lampes à rayons infrarouges rayonnant sur une face (40) du produit (4,41), et un ou des réfractaire(s) blanc(s) (50) placé(s) à moins de 30 mm de l'autre face du produit.

7. Procédé selon l'une quelconque des revendications 4 ou 5, caractérisé en ce que on réchauffe le produit (4) jusqu'à une température comprise entre 1020 et 1060°C avant de le refroidir rapidement, le produit ayant une épaisseur comprise entre 0,4 et 1,4 mm et le temps de montée en température étant compris entre 15 et 40 secondes.

8. Procédé selon l'une quelconque des revendications 4 ou 5, caractérisé en ce que on réchauffe le produit (4) jusqu'à une température comprise entre 1020 et 1060°C avant de le refroidir rapidement, le produit ayant une épaisseur comprise entre 1,4 et 3 mm et le temps de montée en température étant compris entre 30 et 80 secondes.

9. Procédé selon l'une quelconque des revendications 1 à 8, caractérisé en ce que ledit maintien dans le domaine béta comprend 5 à 30 secondes au-dessus de 980°C.

10. Procédé selon la revendication 7, caractérisé en ce que on effectue lesdites opérations de réchauffage, de maintien et de refroidissement rapide au défilé, ledit produit plat (41) circulant entre un ensemble de tubes infrarouges (3) et un réfractaire (50) disposé à moins de 30 mm du produit (41), le produit étant alors protégé sur ses deux faces par du gaz neutre, et circulant ensuite à travers des moyens de refroidissement rapide (9), par exemple de l'eau ou un jet de gaz neutre.

11. Procédé selon la revendication 7, caractérisé en ce que on effectue lesdites opérations de réchauffage, de maintien et de refroidissement rapide au défilé, ledit produit plat (41) circulant entre deux ensembles de tubes infrarouges (3,30) réchauffant symétriquement chacune de ses deux faces, le produit étant alors protégé sur ses deux faces par du gaz neutre, et circulant ensuite à travers des moyens de refroidissement rapide (9), par exemple de l'eau ou un jet de gaz neutre.

## Patentansprüche

1. Verfahren zur Herstellung eines flachen Erzeugnisses (4, 41) aus einer Zirkonlegierung, bestehend aus einem Bandmaterial, Band (41) oder Blech (4) von 0,4 bis 3 mm Dicke, wobei dieses Verfahren nach einem Kaltwalzvorgang eine Aufheizung und ein Halten des Erzeugnisses im Beta-Gebiet umfaßt und sich an das Halten eine rasche Abkühlung und eventuell eine Glühung anschließt, dadurch gekennzeichnet, daß die Aufheizung und das Halten mittels Lampen (3) erfolgt, die Infrarotstrahlen mit einer Wellenlänge von 0,8 bis 5 Mikrometer aussenden, welche auf der Breite des Erzeugnisses eine maximale Temperaturdifferenz (ΔT1) von weniger als 35°C sicherstellen, wobei die Breite 50 bis 600 mm beträgt.

2. Verfahren nach Anspruch 1, dadurch gekennzeichnet, daß die Lampen (3) aus in Längsrichtung des Erzeugnisses (4, 41) angeordneten Infrarotröhren bestehen, wobei jede Röhre einzeln gesteuert wird.

3. Verfahren nach Anspruch 2, dadurch gekennzeichnet, daß die Temperaturdifferenz (ΔT1) weniger als 25°C beträgt.

4. Verfahren nach einem der Ansprüche 1 bis 3, dadurch gekennzeichnet, daß es sich bei der Legierung um Zirkaloy 2 bzw. Zircaloy 4 handelt.

5. Verfahren nach Anspruch 4, dadurch gekennzeichnet, daß die rasche Abkühlung des Erzeugnisses eine Abkühlung von 40 bis 100°C/s zwischen 1000 und 800°C umfaßt.

6. Verfahren nach einem der vorhergehenden Ansprüche, dadurch gekennzeichnet, daß die Aufheizung und das Halten im Beta-Gebiet mit den Infrarotlampen erfolgt, die eine Seite (40) des Erzeugnisses (4, 41) bestrahlen, und mit einem oder mehreren weißen feuerfesten Erzeugnissen (50), die in weniger als 30 mm Entfernung von der anderen Seite des Erzeugnisses angeordnet sind.

7. Verfahren nach einem der Ansprüche 4 oder 5, dadurch gekennzeichnet, daß das Erzeugnis (4) zunächst auf eine Temperatur von 1020 bis 1060°C aufgeheizt und dann rasch abgekühlt wird, wobei das Erzeugnis eine Dicke von 0,4 bis 1,4 mm aufweist und die Aufheizzeit 15 bis 40 Sekunden beträgt.

8. Verfahren nach einem der Ansprüche 4 oder 5, dadurch gekennzeichnet, daß das Erzeugnis (4) zunächst auf eine Temperatur von 1020 bis 1060°C aufgeheizt und dann rasch abgekühlt wird, wobei das Erzeugnis eine Dicke von 1,4 bis 3 mm aufweist und die Aufheizzeit 30 bis 80 Sekunden beträgt.

9. Verfahren nach einem der Ansprüche 1 bis 8, dadurch gekennzeichnet, daß das Halten im Betagebiet 5 bis 30 Sekunden oberhalb 980°C umfaßt.

10. Verfahren nach Anspruch 7, dadurch gekennzeichnet, daß die Vorgänge des Aufheizens, Haltens und raschen Abkühlens ununterbrochen erfolgen, wobei sich das flache Erzeugnis (41) zwischen einem Satz Infrarotröhren (3) und einem feuerfesten Erzeugnis (50) bewegt, das in weniger als 30 mm Entfernung von dem Erzeugnis (41) angeordnet ist und das Erzeugnis dabei auf seinen beiden Seiten durch Neutralgas geschützt ist und danach Mittel zur raschen Abkühlung (9), z.B. Wasser oder einen Neutralgasstrahl, durchläuft.

11. Verfahren nach Anspruch 7, dadurch gekennzeichnet, daß die Vorgänge des Aufheizen, Haltens und raschen Abkühlens ununterbrochen erfolgen, wobei sich das flache Erzeugnis (41) zwischen zwei Sätzen Infrarotröhren (3, 30) bewegt, welche jede seiner beiden Seiten symmetrisch aufheizt und das Erzeugnis dabei auf seinen beiden Seiten durch Neutralgas geschützt ist und danach Mittel zur raschen Abkühlung (9), z.B. Wasser oder einen Neutralgasstrahl, durchläuft.

## Claims

1. A process for the manufacture of a flat product (4, 41) of zirconium alloy consisting of a strip, band (41) or sheet (4) of a thickness of between 0.4 and 3 mm, this process comprising, after cold rolling, heating and maintaining in the beta range of said product, said maintaining being followed by rapid cooling and possibly by annealing, characterised in that said heating and said maintaining are carried out using infra-red lamps (3) with a wavelength of between 0.8 and 5 micrometres which give a maximum temperature difference (ΔT1) over the width of the product of less than 35°C, said width being between 50 and 600 mm.

2. A process according to Claim 1, characterised in that said lamps (3) comprise infra-red tubes placed in the longitudinal direction of said product (4, 41), each tube being controlled individually.

3. A process according to Claim 2, characterised in that said temperature difference (ΔT1) is less than 25°C.

4. A process according to any one of Claims 1 to 3, characterised in that said alloy is Zircaloy 2 or Zircaloy 4.

5. A process according to Claim 4, characterised in that the rapid cooling of the product comprises cooling of 40 to 100°C/s between 1000 and 800°C.

6. A process according to any one of the preceding claims, characterised in that said heating and said maintaining are carried out in the beta range with infra-red beam lamps which radiate on one face (40) of the product (4, 41), and one or more white refractory/refractories (50) placed at least 30 mm from the other face of the product.

7. A process according to any one of Claims 4 or 5, characterised in that the product (4) is heated to a temperature of between 1020 and 1060°C before it is rapidly cooled, the product being of a thickness of between 0.4 and 1.4 mm, and the temperature increase time being between 15 and 40 seconds.

8. A process according to any one of Claims 4 or 5, characterised in that the product (4) is heated to a temperature of between 1020 and 1060°C before it is rapidly cooled, the product being of a thickness of between 1.4 and 3 mm, and the temperature increase time being between 30 and 80 seconds.

9. A process according to any one of Claims 1 to 8, characterised in that said maintaining in the beta range is for 5 to 30 seconds above 980°C.

10. A process according to Claim 7, characterised in that said heating, maintaining and rapid cooling operations are carried out in succession, said flat product (41) circulating amongst an assembly of infra-red tubes (3) and a refractory (50) placed at least 30 mm away from the product (41), the two faces of the product being protected by neutral gas, and then circulating through rapid cooling means (9), for example through water or a jet of neutral gas.

11. A process according to Claim 7, characterised in that said heating, maintaining and rapid cooling operations are carried out in succession, said flat product (41) circulating between two assemblies of infra-red tubes (3, 30) which symmetrically heat each of its two faces, the two faces of the product being protected by neutral gas, and then circulating through rapid cooling means (9), for example water or a jet of neutral gas.
